# EUROPEAN PATENT APPLICATION

(11) **EP 4 215 457 A1**
(43) Date of publication of application: **26.07.2023**
(21) Application number: 20954017.8
(22) Date of filing: 21.09.2020
(51) Int. Cl.: B65D 85/00

(54) **CAPSULE FOR JUICES OR BEVERAGES**

(71) Applicant: Tasty Drink, S.L., 46930 Quart de Poblet - Valencia (ES)
(72) Inventor: FELTRER MATARREDONA, Miguel Angel, 46980 Paterna - Valencia (ES); VALLS GIMENO, Juan Manuel, 46230 Alginet - Valencia (ES)
(74) Representative: Urizar Anasagasti, Jesus Maria
(86) International application number: PCT/ES2020/070567
(87) International publication number: WO 2022/058630

(57) **Abstract**

Disclosed is a capsule for juices or beverages, formed or structured by a single moulded propylene element, which contains a completely airtight and watertight heat-sealable film (16) in the form of a filtering membrane, followed by a labyrinth (14), located at the bottom of the capsule (1), between an outlet cock (15) and the heat-sealable film (16). The labyrinth has a specific design to allow the concentrated fruit juice to circulate therethrough, forming vortices in the outlet for the mixture of concentrated juice and water that mix the mixture to obtain a homogeneous product that exits through the cock (15), located in the narrowest part of the capsule (1) and in which at least six holes converge, the holes connecting to the labyrinth (14) to correctly circulate the concentrated fruit juice with uniformity and continuity. Also claimed is the use of concentrated fruit juice packaged in capsules compatible with those used by machines for coffee or similar soluble products, in order to obtain from a full capsule of concentrated juice a glass of juice equivalent to natural juice.

## Description

### Technical field

The sector of the invention is that of the manufacture of containers, packaging elements or packages, specially adapted for particular articles or materials. More specifically, the manufacture of capsules similar to those used by machines for coffee, but in this case intended to contain liquid concentrated juices which, when extracted from the capsule by means of a machine equivalent to a machine for coffee, allows the preparation of a glass of juice equivalent to natural juice, suitable for being consumed instantly.

The object of the present invention is, therefore, a capsule intended for containing liquid concentrated juice, and also the use of this type of container intended for containing liquid concentrated juice, which can be converted into natural juice with the help of a machine equivalent to machines used to make coffee from coffee, or soluble coffee packaged in capsules.

Furthermore, the capsule of the invention is also intended for containing other concentrates, of coffee, milk, chocolate, or the like, to which, by adding water by means of a machine equivalent to those used to make coffee from coffee, it is possible to obtain a glass of the product in question, equivalent to the natural beverage and suitable for being consumed instantly.

### State of the art

At present, a number of capsules that contain ground coffee or soluble coffee, which is extracted by injecting pressurized water inside same with the aim of forming a hot beverage, are known. For example, patent EP0512468 describes a capsule of these characteristics, intended for being inserted into a machine which, while being closed in a compartment intended for this purpose, introduces on one hand at least one pressurized water injector through the narrowest part, while the widest base is perforated so that, once the pressurized water pumping equipment is put into operation, it causes the outlet of the coffee or the substance contained in the capsule through said larger base, producing a jet of this infusion which is deposited in a cup or container arranged under an outlet cock.

Document WO03059778 describes another example of a capsule, open, in this case, at the smaller base and inside which there is a filter that prevents the outlet of the granulated or powdered product (coffee, cocoa or the like), until a pressurized water injector is inserted through the larger base of the capsule, which causes said filter to break or open, the infusion exiting through a cock-like hole located in the center of its smaller base.

Document WO2014037339 describes a beverage capsule comprising a capsule of the type described above, in this case with a pressure-sensitive membrane located between the soluble ingredient and the dispensing outlet located in the center of the lower base. Behind said pressure-sensitive membrane there is a weakened or pre-cut sheet that opens or widens elastically and plastically when the pressure of the fluid inside said capsule reaches a predetermined value between 0.5 and 20 bar of relative pressure, and then it maintains a more extensive configuration by pushing said membrane against a base provided with various ribs and spikes, in order to cause micro-tears in it so that the products flow through it to a consumer cup. Capsules of this type, which are marketed under the Dolce-Gusto^{®} brand, have a significantly greater storage capacity than those of the type described in the first place, which were injected through the opposite base, the smaller base in that case.

At present there is a great demand for fruit juice, which is generally sold packaged and when it is served it is poured into a glass or consumed directly from the container with the help of a straw. In addition, bars and other public places have machines to squeeze orange juice, immediately before consumption, since this fruit has a standardized shape and dimensions that facilitate its automated handling by means of a machine; but in the case of other types of fruit, a blender or a similar appliance is necessary to obtain a dose of juice, which is why they are not usually available in most establishments, given the complexity involved in their use and handling, despite the fact that customers appreciate freshly squeezed juice, since it is fresh and free of preservatives, as well as the fact that this is the best way to preserve the organoleptic characteristics of fruit juice.

In an attempt to alleviate this deficit, document WO2012176055 describes a device for administering fruit juice, in particular packaged citrus juice. The system has means for opening and emptying the single-dose pack of concentrated fruit juice, which is coupled with a tank for diluting and mixing the concentrated fruit juice with the corresponding doses of water and with a diluted fruit juice delivery conduit. This device, if put into practice, could alleviate the problem of the availability of quality juice, which can be prepared moments before consumption in public places of high consumption, but since it requires the implementation of a new type of machine, completely different from the existing ones, it is not easy for it to become established. At the domestic level, where in any kitchen there is no room for any more appliances, it is completely unfeasible, especially with the cost that the purchase of this new appliance may entail.

### Description of the invention

Based on the prior state of the art, the objective of the present invention is to provide a capsule for concentrated juice, compatible with most installed machines for coffee, so that the consumer or establishment only has to insert one of said capsules into this type of machine to obtain a glass of juice completely comparable in flavor and quality to a natural juice.

In order to achieve the proposed objectives, the invention proposes a capsule that has the features of claim 1 and, to this end, a capsule has been designed which, being similar in shape and size to certain coffee capsules so that they can be used in a machine of these characteristics, is also capable of containing the juice without any loss of watertightness while it is not extracted from its interior; at the same time, at the moment of its extraction, by mixing the concentrated juice with water, it makes it possible to obtain a juice having characteristics equivalent to natural juice, with a homogenous mixture caused by mixing the concentrated juice with water so that it even further resembles freshly squeezed juice.

The capsule of the invention presents substantial differences with respect to others existing in the state of the art, since these could not contain concentrated fruit juice since they would leak, among other reasons, because the acidity of the juice would cause a degradation of the filter that retains the ground or soluble coffee, in addition to the fact that the fruit juice would not come out uniformly, since they have not been designed or developed for that raw material, and the product obtained could be unpleasant to consume. Among said differences / characteristics, the following stand out:
- It is made up of or structured by a single element which, at least at the larger base, has a completely watertight heat-sealable closure film on which a hole is generated when it is inserted into a coffee machine, through which pressurized water is injected into the interior of capsule as the machine is operated, in a manner that is completely equivalent to obtaining a beverage from coffee or another soluble product, preferably mixed with water at room temperature.
- It has a heat-sealable film in the form of a filter inside same specially designed to be in contact with concentrated fruit juice for at least 12 months, without migrations, as has been verified in the tests carried out on the product. This film is airtight and manages to retain the concentrated fruit juice until the capsule is used in the machine, which, when injecting pressurized water, breaks it and allows the outlet of the product through a cock located at the lower base of the capsule.
- In the inner part and at the bottom of the capsule, between an outlet orifice and the aforementioned heat-sealable film, there is a labyrinth that has a specific design so that when the concentrated fruit juice circulates therethrough with the pressurized water that the machine injects, it does so uniformly and continuously, so that a vortex is produced in the outlet for the mixture of concentrated juice and water that mix the mixture to obtain a homogenous product.
- In the outlet cock, located in the narrowest part of the capsule, at least six holes converge, the holes having been designed to correctly circulate the concentrated fruit juice through said labyrinth with uniformity and continuity.

The body of the capsule can be made of polypropylene, in which case the closure film located at the base of the capsule is fixed by heat sealing on that base surface. Or it can also be made of a compostable material, in which case it is made up of a thermoformed cellulose base sheet, with a surface coating of at least one sheet of PLA plastic film for food use, which may or may not be compostable, which at the same time that coats the inside of the capsule, it also forms the film that closes the base of the capsule to retain the liquid inside same while the pressurized water from the machine for coffee is not applied.

Although the capsule is intended primarily for concentrated fruit or vegetable juice, it can also contain other concentrated products suitable for preparing hot or cold infusions, namely:
- Coffee, in any presentation: decaffeinated, with milk, cappuccino, etc., in which case the composition of the contents of the capsule, in addition to coffee in the corresponding form and/or milk or milk cream, also in their different forms of presentation, contains: water, flavoring, preservatives: sodium benzoate, potassium sorbate and metabisulfite.
- Chocolate, with the following composition: sucrose, fructose, defatted cocoa, emulsifier, sunflower oil and salt.
- Milk, in any of its multiple forms of presentation, whole, skimmed, soy, etc.

The invention also proposes the use of concentrated fruit juice (orange, pineapple, peach, apple, pomegranate, kiwi, etc.) or vegetable juice in capsules compatible with those used by machines for coffee, in order to be able to use said machines to obtain a glass of juice or vegetables equivalent to natural juice or vegetables from one of said capsules filled with concentrated juice or concentrated vegetables.

Concentrated fruit juice is understood to be the product obtained from fruit juice of one or more species, by physical removal of a certain part of the water. Juice is introduced in the capsules proposed in the invention with a concentration comprised between 1:6 and 1:7, that is, by mixing the contents of a capsule with 5 or 6 parts of water, respectively, 6 or 7 parts of juice would be obtained in relation to the contents of a capsule.

The techniques used today for the concentration of juices are increasingly respectful of fruits and make it possible to obtain concentrated, aseptic refrigerated pasteurized (sterile) fruit juice, which is what is introduced into the capsules of the invention. In addition, a 1% natural preservative cl is dosed in each capsule, which consists of a powder with a grain size of less than 1.3 mm, not caked together, corresponding to the formula and in accordance with applicable regulations for food products, with the contents of this 1% natural preservative being plant extracts, fermented sugar and spice in proportions from highest to lowest as noted and in this way it is possible for the fruit juice concentrate to go from refrigerated (0-10°C) to room temperature without altering the best before date, since spores, fungi or bacteria do not proliferate during its shelf life, which ranges from 12 to 18 months, depending on the variety and as indicated on each technical data sheet for each variety, as indicated by the multiple tests carried out in the laboratory with pH, av and microbiological analyses.

As a complement to the description provided herein, and for the purpose of helping to make the features of the invention more readily understandable, the present specification is accompanied by a set of drawings which, by way of illustration and not limitation, represent the following:
Figure 1 shows a perspective view of a capsule (1) intended for containing fruit or vegetable juice that has been developed according to the present invention.
Figure 2 shows a diametrical sectional view of a capsule made of moulded polypropylene.

### Detailed description of the embodiments

In essence, the invention basically consists of a capsule for juices, of the type in which its larger base (11) is closed by means of a heat-sealable film (13), on which a hole is generated when the capsule is inserted into a coffee machine, through which pressurized water is injected into its interior as the machine is operated, in a manner equivalent to obtaining a beverage from coffee or another soluble product, preferably mixed with cold water; said capsule having near the smaller base (12) and inside same a membrane (16) that retains the product contained inside same until it is used in the machine, at which time the pressurized water injected by it breaks said membrane (16) and allows the outlet of the product through a cock (15) located in the smaller base of the capsule; which is made up of or structured by a single moulded element.

Inside the capsule and as a means of retaining the juice there is a completely airtight and watertight thin sheet or heat-sealable film (16), suitable for being in contact with concentrated fruit or vegetable juice for at least 12 months at room temperature.

Between the outlet cock (15) and the aforementioned heat-sealable film (16) there is a labyrinth (14), located in the inner part and at the bottom of the capsule (1), which labyrinth has a suitable design to allow the concentrated fruit juice to circulate therethrough, forming vortices in the outlet for the mixture of concentrated juice and water that mix the mixture to obtain a homogenous product, while reducing the outlet pressure of the liquid since if the capsule is going to be used in a machine for coffee that has been designed to work at an adequate pressure to obtain an infusion or solution and the filtrate of the prepared infusion, as in this case it is only necessary to dissolve the concentrated juice, if the pressure is not reduced, the liquid would gush out and possibly splash the user/consumer.

The outlet of the liquid is carried out as in a conventional machine through an outlet cock (15), located in the narrowest part of the capsule (1); but unlike a machine for coffee, in this case at least six holes converge in same, the holes connecting to the labyrinth (14) to correctly circulate the concentrated fruit juice, mixing it with water, with uniformity and continuity therethrough.

The capsule of the invention can be made of moulded polypropylene, in which the closure film (16) is fixed on the inside and on the lower base, fixed by heat sealing on that base surface (see Figures 5-6).

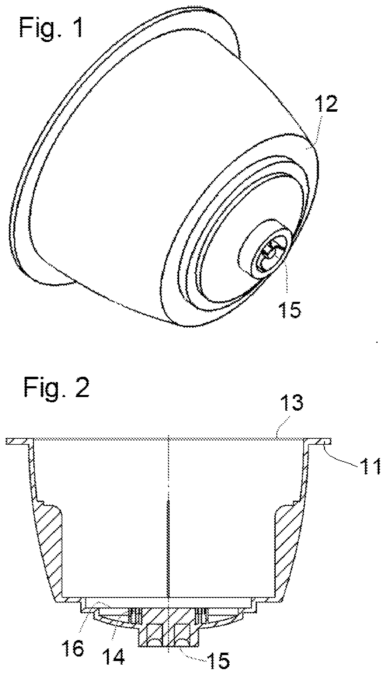

In another alternative embodiment, this capsule is made of a compostable material, such as a thermoformed cellulose sheet, internally provided with a surface coating made up of at least one sheet of an also compostable film, which coats the capsule internally while forming the film (16) that closes the base of the capsule to retain the liquid inside same while pressurized water is not applied to said capsule (1) (see Figures 1-4). The biodegradation process of capsules of this type takes approximately one year and the particularity of a compostable capsule is that it can be used as fertilizer for household plants, in addition to generating reusable waste.

Regarding the fruit juice contained in the capsules of the invention, it should be noted that said fruit juice is obtained from one or more species, by physical removal of a certain part of the water up to a concentration comprised between 1:6 and 1:7; so that by mixing the contents of a capsule with 5 or 6 parts of water, 6 or 7 parts of juice are obtained with a concentration equivalent to natural juice.

Inside one of these capsules, 40 g of concentrated fruit juice are packaged, and when the machine is operated, the aforementioned 5 or 6 parts of water are passed over this concentrate, thus achieving its reconstruction, whereby about 180 - 210 ml of juice with a concentration equal to that of natural juice are obtained.

Said fruit juice has been subjected to a pasteurization and sterilization process and, preferably, incorporates in each capsule a 1% natural preservative cl, which consists of a powder with a grain size of less than 1.3 mm, not caked together, corresponding to the formula and in accordance with applicable regulations for food products, with the contents of this 1% natural preservative being plant extracts, fermented sugar and spice in proportions from highest to lowest as noted and in this way it is possible for the fruit juice concentrate to go from refrigerated (0-10°C) to room temperature without altering the best before date, since spores, fungi or bacteria do not proliferate during its shelf life, which ranges from 12 to 18 months, depending on the variety and as indicated on each technical data sheet for each variety, as indicated by the multiple tests carried out in the laboratory with pH, av and microbiological analyses.

These capsules can also contain a coffee-based beverage, in any presentation: decaffeinated, with milk or cappuccino; chocolate, or milk also in any of its forms of presentation in the form of liquid concentrate, with a concentration comprised between 1:6 to 1:7; so that by mixing the contents of a capsule with 5 or 6 parts of water, 6 or 7 parts of a beverage equivalent to the same natural beverage contained in the capsule, e.g., coffee, chocolate, milk, etc., are obtained.

Finally, the capsules can contain teas, infusions, creams, broths, proteins, vitamins or plant extracts, also in liquid format and all of them dissolved in 15 parts of water to one part of liquid concentrate.

Having sufficiently described the nature of the invention, in addition to a preferred exemplary embodiment, it is hereby stated for the relevant purposes that the materials, shape, size and layout of the described elements may be modified, provided that it does not imply altering the essential features of the invention claimed below.

## Claims

1. A capsule for juices or beverages, of the type in which its larger base (11) is closed by means of a heat-sealable film (13), on which a hole is generated when the capsule is inserted into a coffee machine, through which pressurized water is injected into its interior as the machine is operated, in a manner equivalent to obtaining a beverage from coffee or another soluble product, preferably mixed with water; said capsule having near the smaller base (12) and inside same a membrane (16) that retains the product contained inside same until it is used in the machine, at which time the pressurized water injected by it breaks said membrane (16) and allows the outlet of the product through a cock (15) located in the smaller base of the capsule; which is made up of or structured by a single moulded element, **comprising:**
- a completely airtight and watertight heat-sealable film (16) in the form of a filtering membrane, suitable for being in contact with at least concentrated fruit or vegetable juice for at least 12 months;
- a labyrinth (14), located in the inner part and at the bottom of the capsule (1), between an outlet cock (15) and the heat-sealable film (16), which labyrinth has a suitable design to allow the concentrated fruit juice to circulate therethrough, forming vortices in the outlet for the mixture of concentrated juice and water that mix the mixture to obtain a homogenous product;
- an outlet cock (15), located in the narrowest part of the capsule (1) and in which at least six holes converge, the holes connecting to the labyrinth (14) to correctly circulate the concentrated fruit juice, mixed with water, with uniformity and continuity therethrough.

2. The capsule according to claim 1, **characterized in that** the fruit juice contained inside same is obtained from one or more species, by physical removal of a certain part of the water up to a concentration comprised between 1:6 and 1:7; so that by mixing the contents of a capsule with 5 or 6 parts of water, 6 or 7 parts of juice are obtained with a concentration equivalent to natural juice.

3. The capsule according to the preceding claims, **characterized in that** the fruit juice contained inside same is juice that has been subjected to a pasteurization and sterilization process.

4. The capsule according to the preceding claims, **characterized in that** the fruit or vegetable juice contained in each capsule incorporates in the order of 1% of a natural preservative consisting of powder made from plant extracts, fermented sugar and spices.

5. The capsule according to the preceding claims, **characterized in that** it is made of moulded polypropylene, inside which and close to the lower base there is fixed the closing film (16), fixed by heat sealing on that base surface.

6. The capsule according to claims 1-4, **characterized in that** it is made of a compostable material, such as a thermoformed cellulose sheet, internally provided with a surface coating made up of at least one sheet of a compostable film, which coats the capsule internally while forming the film (16) that closes the base of the capsule to retain the liquid inside same while pressurized water is not applied to said capsule (1).

7. Use of concentrated fruit juice packaged in capsules compatible with those used by machines for coffee or similar soluble products, in order to obtain from a full capsule of concentrated juice a glass of juice equivalent to natural juice.

8. Use of coffee, in any presentation: decaffeinated, with milk or cappuccino; chocolate, or milk also in any of its forms of presentation in the form of liquid concentrate, packaged in capsules compatible with those used by machines for coffee or similar soluble products, in order to obtain from a full capsule of said concentrate a glass of the beverage equivalent to the same natural beverage.

9. Use of teas, infusions, creams, broths, proteins, vitamins or plant extracts, also in liquid format and all of them dissolved in 15 parts of water to one part of liquid concentrate, packaged in capsules compatible with those used by machines for coffee or similar soluble products, in order to obtain from a full capsule of said concentrate a glass of the beverage equivalent to the same natural beverage.
